# EUROPEAN PATENT SPECIFICATION

(11) **EP 1 527 448 B1**
(45) Date of publication and mention of the grant of the patent: **16.08.2006**
(21) Application number: 03738400.5
(22) Date of filing: 25.06.2003
(51) Int. Cl.: G11B 7/24

(54) **MULTI-STACK OPTICAL INFORMATION CARRIER COMPRISING THERMOCHROMIC LAYER**
MEHRFACH GESTAPELTER OPTISCHER AUFZEICHNUNGSTRÄGER, WELCHER EINE THERMOCHROME SCHICHT ENTHÄLT
SUPPORT OPTIQUE D'ENREGISTREMENT A PLUSIEURS EMPILEMENTS ET A COUCHE THERMOCHROME

(30) Priority: 24.07.2002 EP 02078016
(43) Date of publication of application: 04.05.2005
(73) Proprietor: Koninklijke Philips Electronics N.V., 5621 BA Eindhoven (NL)
(72) Inventor: MEINDERS, Erwin, R., NL-5656 AA Eindhoven (NL)
(74) Representative: Uittenbogaard, Frank
(86) International application number: PCT/IB2003/002848
(87) International publication number: WO 2004/010424

(56) References cited:
- US-A- 5 297 132
- US-A1- 2001 016 242
- US-A1- 2002 018 870
- US-B1- 6 231 945

## Description

The present invention relates to a multi-stack optical information carrier for recording information by means of a laser beam, said optical information carrier comprising
- a substrate layer,
- at least two recording stacks, each comprising a recording layer, at least one heat sink layer and dielectric layers between said recording layer and said at least one heat sink layer,
- at least one spacer layer separating the at least two recording stacks,
- a cover layer.

Such multi-stack optical information carriers are known, for instance from US 6,190,750. Such optical information carriers are applied as recordable (write once) or rewritable (write multiple times) information carriers in DVD or DVR technology, for instance as dual layer disc comprising two layers of a phase-change material. Optical information carriers can also have more than two recording layers, i.e. several recording stacks on top of each other, and other recording materials than phase-change material.

In such optical information carriers the recording layers are made of phase-change material, such as chalcogenide alloys, Ge2Sb2Te5 alloys, SbTe alloys, etc. Further useful alloys are In-Sb-Te, Te-Se-Te, Ag-In-Sb-Te, Ge-In-Sb-Te or Ge-Te. Especially useful compounds are described in the patent application WO 01/13370 and WO 97/50084. Said materials are characterized in that the said phase-change material can have a crystalline and an amorphous phase. The amorphous phase is obtained by locally heating said initially crystalline recording layer with a focussed laser beam to above its melting temperature, and subsequent quenching (fast cooling) it. The crystalline phase is obtained by heating the amorphous material with focussed laser spot to above the glass transition temperature to allow re-crystallization of the phase-change material. These phase changes are reversible making this material suitable for multiple write cycles. Also one write cycle is possible. By applying a sequence of laser pulses with high (writing) and lower (erasing) laser power, an alternating sequence of amorphous marks and crystalline spaces is obtained that represent the binary data. The different optical properties of the amorphous and the crystalline phase allow read out of data. This type of phase-change material can also be applied in write once discs. The initial state of the phase-change material may be as-deposited amorphous of crystalline, the phase of the written mark being its counterpart. This means that amorphous marks may be written by melt-quenching the phase-change layer. Crystalline marks may be written by crystallization of the initially amorphous material.

In a dual-stack information carrier, both information (recording) layers are written and read by the same optical laser beam. To optically access the deep recording stack, the first recording stack needs to be semitransparent. To be able to write data in the deep recording stack, the first recording stack needs about 50% transparency. If the reflection of the first recording stack is 10%, about 40% absorption of the incident light remains. A transmission of 50% is achieved only if thick metallic heat sink layers are omitted from the recording stacks. These thick metallic layers are typically used in conventional phase-change recording stacks. The omission of a thick metallic heat sink layer leads to slow-cooling behavior. The thermal response may be improved by the addition by thin metallic layers, such as 10 nm Ag layers, or semitransparent heat sink layers. While the cooling rate is significantly improved by the addition of these semitransparent heat sink layers, the absorption is still 40%. As a consequence much more laser power is required to melt-quench the phase-change layer for writing amorphous marks in the crystalline layer. Typically, twice the write power is needed when semitransparent heat sink layers are applied with a thermal conductivity of about 5 times that of ZnS-SiO2, as typically used in single-stack phase-change discs.

It is therefore an object of the present invention to provide a multi-stack optical information carrier having an improved sensitivity during writing, in particular in the first recording stack.

This object is achieved according to the present invention by an information carrier as claimed in claim 1, which is characterized in that at least one recording stack further comprises at least one thermochromic layer having temperature-dependent optical characteristics for improving the sensitivity of at least one of said recording stacks during recording.

The invention is based on the idea that the presence of a thermochromic layer is only sensed when data are written in the first recording stack, i.e. the laser beam is focussed on said phase-change recording stack. More precisely, a dual-stack optical recording carrier shall be considered as an example, which comprises two recording stacks that are separated by a spacer layer of about 10-100µm thickness (the lower values refer to high density information carriers, such as BD (former DVR system), the higher values refer to for example DVD dual-stack discs). In one state, when the incident laser beam is focussed on the deep recording stack, the first recording stack experiences a defocused laser beam. Although the absorption of the first recording stack is still 40%, the optical energy is spread out across a very large area. The optical energy density is such low that the first recording stack is not effectively heated up. In this situation, the additional thermochromic layer remains at low temperature and the optical properties of said thermochromic layer are not noticeably changed.

In the other state, when the laser beam is focussed on the first recording layer, the optical energy density is much higher due to the diffraction limited optical spot. The absorbed laser power, 40% of the incident light, is now concentrated in a very small area such that the corresponding temperature rise amounts easily the melting temperature of the phase-change material. If a thermochromic layer is located in the vicinity of the phase-change layer, said thermochromic layer will also experience a significant temperature rise (100-200C). This temperature rise is sufficient to allow a significant change of the optical properties of the said thermochromic layer. This results in either an increased reflection or increased absorption of the thermochromic layer. An increased absorption leads to an increased temperature. In this way, a self-strengthening effect is achieved being that more laser power is effectively used to heat up the first recording stack to enable writing and erasing of data.

Preferred embodiments of the multi-stack optical information carrier are defined in the dependent claims. In a first embodiment the thermochromic layers have a temperature-dependent absorption characteristic in which case preferably a thermochromic dye material, in particular cyanine or phthalocyanine dye, is used as material. According to an alternative embodiment the thermochromic layers have a temperature dependent reflection characteristic, in which case preferably vanadium dioxide is used as material.

A further improvement of the sensitivity during writing can be achieved by an embodiment in which each recording stack comprises at least one thermochromic layer. Moreover, in another embodiment at least one recording stack comprises at least two thermochromic layers, i.e. one thermochromic layer on each side of the recording layer separated there from it by a dielectric layer. Thus, even each recording stack may comprise two thermochromic layers arranged in this way.

The invention will now be explained in more detail with reference to the drawings in which:
Fig. 1 diagrammatically shows a cross-section of a first embodiment of an optical information carrier according to the present invention,
Fig. 2 diagrammatically shows a cross-section of another embodiment of an optical information carrier according to the present invention,
Fig. 3 shows the reflection during and after DC-write as a function of the DC power for two recording speeds,
Fig. 4 shows the reflection of phthalocyanine dye as a function of the temperature, and
Fig. 5 shows the temperature-dependent reflection of IPI-dye stacks.

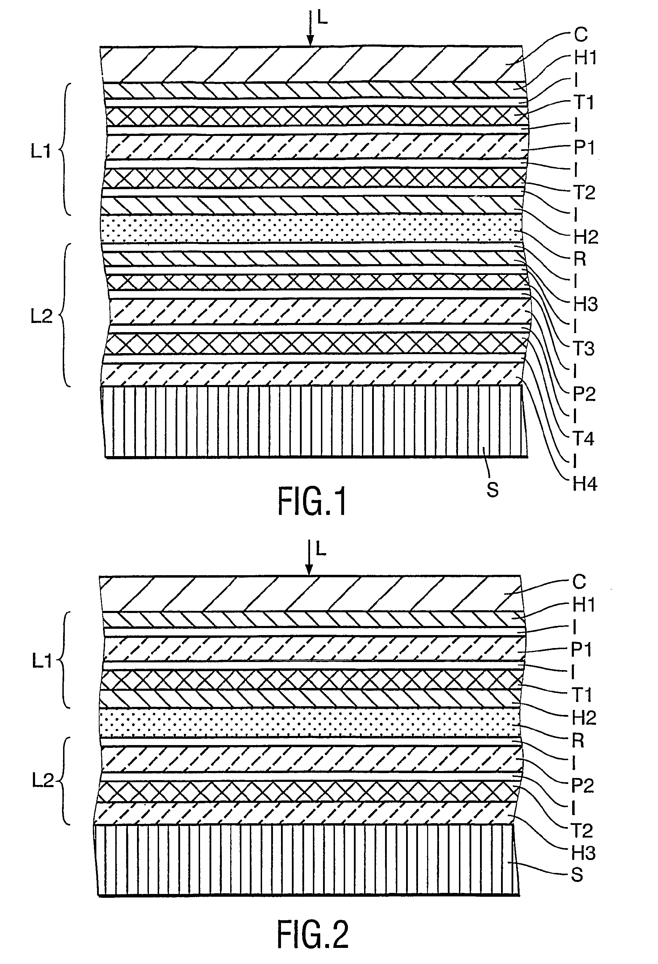

Fig. 1 diagrammatically shows a cross section of a first embodiment of a dual-layer information carrier according to the present invention. Shown are, from top, where the laser light L is incident, to bottom:
- a cover layer C for protection,
- a first transparent heat sink layer H1, for example made of indium-tin-oxide (ITO), aluminum nitride (AIN) or hafnium nitride (HfN),
- a dielectric layer I as interference layer, e.g. made of Ta₂O₅, ZnS-SiO₂, TiO₂,
- a first thermochromic layer T1 as absorption layer, for example made of a thermochromic dye,
- a dielectric layer I,
- a first phase-change recording layer P1, e.g. made of Ge₂Sb₂Te₅ or doped SbTe,
- a dielectric layer I,
- a second thermochromic layer T2,
- a dielectric layer I,
- a second heat sink layer H2,
- a spacer layer R to optically and thermally separate the two recording stacks (10-100µm)
- a dielectric layer I
- a third heat sink layer H3
- a dielectric layer I
- a third thermochromic layer T3
- a dielectric layer I
- a second phase change recording layer P2,
- a dielectric layer I,
- a forth thermochromic layer T4 as absorption layer,
- a dielectric layer I,
- a forth heat sink layer H4, which must not be semi-transparent, but can be made of a metal, e.g. Ag, Al, and
- a substrate S, e.g. of polycarbonate.

As explained above when the laser beam L is focussed on the second recording stack L2 still 50% of the incident laser power is available for writing in the lower L2 stack since at temperatures up to about 100°C the thermochromic layers T1, T2 have a sufficiently high transmission rate. However, when the laser beam L is focussed on the upper recording stack L1, the stack L1 including the additional thermochromic layers T1 and T2 heats up. This involves a significant change of the optical properties of the thermochromic layer and leads to an increased absorption of stack L1due to an increased reflection or absorption of the thermochromic layers T1, T2. Thus, more laser power is effectively used to heat up the first recording layer P1 and provides a self-strengthening effect.

The thickness of the dielectric layer I between the phase change layer P1 and the thermochromic layer T1 and T2 can be chosen such that the temperature drop across these layers results in the optimum temperature rise of T1 and T2 such that optimum absorption results (i.e. the temperature should not exceed 250°C to prevent decomposition of the thermochromic layer). For the write-once variant of this invention, this decomposition is not an issue and these higher temperatures are thus allowed. Further, the other layers in the stack contribute to the thermal response of the entire stack as well and, therefore, their thickness and thermal properties (read material) should be selected carefully to ensure an optimum temperature rise of the thermochromic layers.

The described embodiment can be modified by e.g. only providing the upper recording stack L1 with one or two additional thermochromic layers as shown, but not the lower recording stack L2. Further, more than two recording stacks can be provided. Still further, the dielectric layers I provided on each side of the recording layers P1, P2 can also be omitted.

Another embodiment of an optical information carrier according to the present invention is diagrammatically shown as a cross-section in Fig. 2. Therein, again two recording stacks L1, L2 are provided, each comprising one additional thermochromic layer T1 or T2, respectively. In this embodiment, the thermochromic layers T1, T2 are adapted such that they show a temperature-dependent reflection characteristic, i.e. the reflection rate of the thermochromic layers T1, T2 increases with temperature. Preferably, vanadium dioxide VO₂ is used as material for such thermochromic layers.

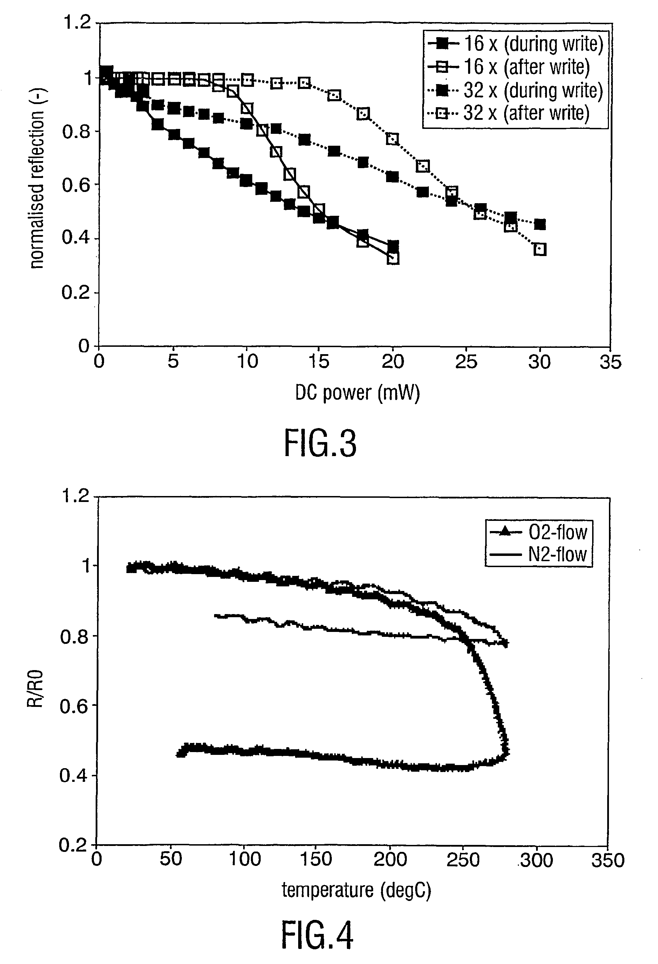

The temperature-dependent absorption of two types of discs (CD-R) was investigated, namely cyanine and phthalocyanine dyes. The temperature-dependent absorption of a phthalocyanine dye is illustrated in Fig. 3. The reflection during DC-write and after DC-write is given as a function of the applied continuous write power. A clear power range is observed in which the reflection drops reversibly. This indicates that during writing, at an elevated temperature, the absorption of the stack was significantly increased but that after passage of the laser spot, after cooling down of the stack, that the reflection remained its initial value (at room temperature).

The reflection change as a function of temperature was also measured for a phthalocyanine dye, see Fig. 4. The experiments have been performed in an N2 and 02 environment. Two phenomena are clearly observable. The gradual reversible decrease in reflection is attributed to the increased absorption with increasing temperature. Further, the irreversible degradation of the dye around 275°C.

Both results illustrate that the absorption of the dye is temperature-dependent. If a dye layer is used in an IPI phase-change stack, leading to an IPI-dye stack, the dye layer starts to absorb laser light at elevated temperature. To prevent degradation of the dye layer, for application in a rewritable format, the dielectric layer between the recording layer (P) and thermochromic dye layer (T) should preferably be between 10-200 nm, in particular between 30-100 nm.

In the other embodiment, it is proposed to use a dye layer as a thermochromic reflector: at elevated temperatures, the index of refraction is changed leading to an increased absorption in the recording layer. Optical calculations prove this.

It is also possible to apply an additional dye layer to a write-once PC-disc: a multi-stack disc: IPI-dye - spacer - IPI-dye - etc. or dye-IPI-dye - spacer - dye-IPI-dye - spacer etc.

The dielectric layer between the recording and dye layer is preferably between 0 and 50 nm, degradation of the dye is then allowable.

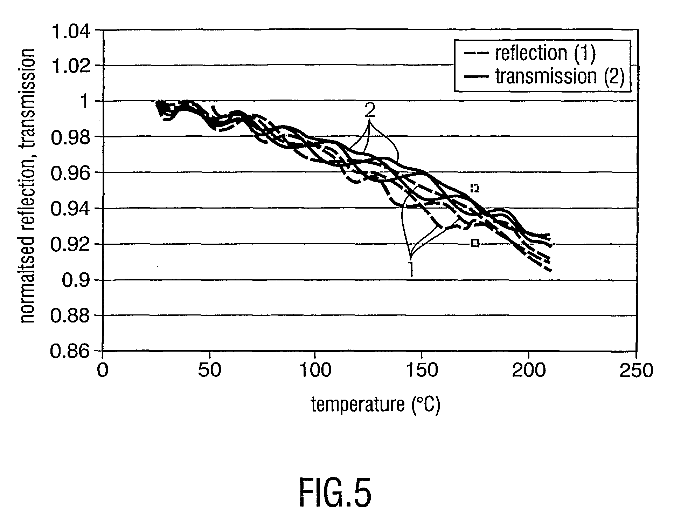

Fig. 5 shows the temperature-dependent reflection of IPI-dye stacks, measured during heating up and cooling down of the recording stacks. The reversible change in optical properties of the stack, caused by the thermochromic layer, is clearly observed from the measurements. Shown are measurements of the normalized reflection 1 and of the normalized transmission 2.

## Claims

1. A multi-stack optical information carrier for recording information by means of a laser beam, said optical information carrier comprising:
- a substrate layer,
- at least two recording stacks, each comprising a recording layer, at least one heat sink layer and dielectric layers between said recording layer and said at least one heat sink layer,
- at least one spacer layer separating the at least two recording stacks, and
- a cover layer,
**characterized in that** at least one recording stack further comprises at least one thermochromic layer having temperature-dependent optical characteristics for improving the sensitivity of at least one of said recording stacks during recording.

2. A multi-stack optical information carrier as claimed in claim 1, **characterized in that** said at least one thermochromic layer has a temperature-dependent absorption characteristic.

3. A multi-stack optical information carrier as claimed in claim 2, **characterized in that** said thermochromic layer is essentially made of a thermochromic dye, in particular cyanine or phthalocyanine dye.

4. A multi-stack optical information carrier as claimed in claim 1, **characterized in that** said at least one thermochromic layer has a temperature-dependent reflection characteristic.

5. A multi-stack optical information carrier as claimed in claim 4, **characterized in that** said thermochromic layer is essentially made of vanadium dioxide.

6. A multi-stack optical information carrier as claimed in claim 1, **characterized in that** each recording stack comprises at least one thermochromic layer.

7. A multi-stack optical information carrier as claimed in claim 1, **characterized in that** at least one recording stack comprises a thermochromic layer on both sides of the recording layer and dielectric layers for separating the thermochromic layers from the recording layer.

8. A multi-stack optical information carrier as claimed in claim 1, **characterized in that** said recording layers are made of a phase-change material.

9. A multi-stack optical information carrier as claimed in claim 1, **characterized in that** said recording layers are made of a write-once material.

## Patentansprüche

1. Optischer Mehrfachstapel-Informationsträger zur Aufzeichnung von Informationen durch einen Laserstrahl, wobei der optische Informationsträger Folgendes umfasst:
- eine Substratschicht,
- zumindest zwei Aufzeichnungsstapel, die jeweils eine Aufzeichnungsschicht, zumindest eine Wärmeableitschicht, und dielektrische Schichten zwischen der Aufzeichnungsschicht und der zumindest einen Wärmeableitschicht umfassen,
- zumindest eine Beabstandungsschicht, die die zumindest zwei Aufzeichnungsstapel trennt,
- eine Abdeckschicht.
**dadurch gekennzeichnet, dass** zumindest ein Aufzeichnungsstapel ferner zumindest eine thermochrome Schicht umfasst, die temperaturabhängige optische Eigenschaften aufweist, um die Empfindlichkeit zumindest eines der Aufzeichnungsstapel während der Aufzeichnung zu verbessern.

2. Optischer Mehrfachstapel-Informationsträger nach Anspruch 1, **dadurch gekennzeichnet, dass** die zumindest eine thermochrome Schicht eine temperaturabhängige Absorptionseigenschaft aufweist.

3. Optischer Mehrfachstapel-Informationsträger nach Anspruch 2, **dadurch gekennzeichnet, dass** die thermochrome Schicht im Wesentlichen aus einem thermochromen Farbstoff, insbesondere Cyanin- oder Phthalocyanin-Farbstoff, hergestellt ist.

4. Optischer Mehrfachstapel-Informationsträger nach Anspruch 1, **dadurch gekennzeichnet, dass** die zumindest eine thermochrome Schicht eine temperaturabhängige Reflexionseigenschaft aufweist.

5. Optischer Mehrfachstapel-Informationsträger nach Anspruch 4, **dadurch gekennzeichnet, dass** die thermochrome Schicht im Wesentlichen aus Vanadiumdioxid hergestellt ist.

6. Optischer Mehrfachstapel-Informationsträger nach Anspruch 1, **dadurch gekennzeichnet, dass** jeder Aufzeichnungsstapel zumindest eine thermochrome Schicht umfasst.

7. Optischer Mehrfachstapel-Informationsträger nach Anspruch 1, **dadurch gekennzeichnet, dass** zumindest ein Aufzeichnungsstapel an beiden Seiten der Aufzeichnungsschicht eine thermochrome Schicht und dielektrische Schichten zur Trennung der thermochromen Schichten von der Aufzeichnungsschicht umfasst.

8. Optischer Mehrfachstapel-Informationsträger nach Anspruch 1, **dadurch gekennzeichnet, dass** die Aufzeichnungsschichten aus einem Phasenänderungsmaterial hergestellt sind.

9. Optischer Mehrfachstapel-Informationsträger nach Anspruch 1, **dadurch gekennzeichnet, dass** die Aufzeichnungsschichten aus einem einmalig beschreibbaren Material hergestellt sind.

## Revendications

1. Support optique d'informations à plusieurs empilements pour enregistrer des informations au moyen d'un faisceau laser, ledit support optique d'informations comprenant:
- une couche de substrat,
- au moins deux empilements d'enregistrement, chacun comprenant une couche d'enregistrement, au moins une couche de refroidissement et des couches diélectriques entre ladite couche d'enregistrement et ladite au moins une couche de refroidissement,
- au moins une couche intermédiaire séparant les au moins deux empilements d'enregistrement, et
- une couche de couverture,
**caractérisé en ce qu'**au moins un empilement d'enregistrement comprend encore au moins une couche thermochromique ayant des caractéristiques optiques dépendant de la température pour améliorer la sensibilité d'au moins un desdits empilements d'enregistrement pendant l'enregistrement.

2. Support optique d'informations à plusieurs empilements selon la revendication 1, **caractérisé en ce que** ladite au moins une couche thermochromique présente une caractéristique d'absorption dépendant de la température.

3. Support optique d'informations à plusieurs empilements selon la revendication 2, **caractérisé en ce que** ladite couche thermochromique est fabriquée essentiellement à partir d'une teinture thermochromique, en particulier une teinture de cyanine ou de phtalocyanine.

4. Support optique d'informations à plusieurs empilements selon la revendication 1, **caractérisé en ce que** ladite au moins une couche thermochromique présente une caractéristique de réflexion dépendant de la température.

5. Support optique d'informations à plusieurs empilements selon la revendication 4, **caractérisé en ce que** ladite couche thermochromique est fabriquée essentiellement à partir de dioxyde de vanadium.

6. Support optique d'informations à plusieurs empilements selon la revendication 1, **caractérisé en ce que** chaque empilement d'enregistrement comprend au moins une couche thermochromique.

7. Support optique d'informations à plusieurs empilements selon la revendication 1, **caractérisé en ce qu'**au moins un empilement d'enregistrement comprend une couche thermochromique des deux côtés de la couche d'enregistrement et des couches diélectriques pour séparer de la couche d'enregistrement les couches thermochromiques.

8. Support optique d'informations à plusieurs empilements selon la revendication 1, **caractérisé en ce que** lesdites couches d'enregistrement sont fabriquées à partir d'un matériau de changement de phase.

9. Support optique d'informations à plusieurs empilements selon la revendication 1, **caractérisé en ce que** lesdites couches d'enregistrement sont fabriquées à partir d'un matériau étant inscriptible une seule fois.
